# EUROPEAN PATENT SPECIFICATION

(11) **EP 3 564 714 B1**
(45) Date of publication and mention of the grant of the patent: **08.12.2021**
(21) Application number: 17885598.7
(22) Date of filing: 27.12.2017
(51) Int. Cl.: G02B 1/14, B32B 27/20, B32B 27/38, C09D 7/40, C09D 163/00, C09D 183/06, G02C 7/02

(54) **HARD COAT LAYER-FORMING COMPOSITION AND EYEGLASS LENS**
HARTSCHICHTBILDENDE ZUSAMMENSETZUNG UND BRILLENGLAS
COMPOSITION DE FORMATION DE COUCHE DE REVÊTEMENT DUR ET LENTILLE DE LUNETTES

(30) Priority: 28.12.2016 JP 2016256389
(43) Date of publication of application: 06.11.2019
(73) Proprietor: Nikon-Essilor Co., Ltd., Tokyo 130-0026 (JP)
(72) Inventor: TAKESHITA Katsuyoshi, Tokyo 130-0026 (JP)
(74) Representative: Hoffmann Eitle
(86) International application number: PCT/JP2017/046979
(87) International publication number: WO 2018/124204

(56) References cited:
- JP-A- 2004 285 248
- JP-A- 2009 256 563
- JP-A- 2010 515 778
- US-A1- 2016 297 933

## Description

### TECHNICAL FIELD

The present invention relates to a hard coat layer-forming composition and a spectacle lens.

### BACKGROUND ART

To impart abrasion resistance to plastic spectacle lens bases, a hard coat layer is disposed on or above a plastic spectacle lens base in some cases (for instance, Patent Literature 1).

Patent Literature 2 describes a polyorganosilsesquioxane comprising constitutional units represented by specific formulas (I) and (II) shown in this document in a mole ratio of (I)/(II) of from 5 to 18. The formula (I) comprises an epoxy-containing group. A curable composition comprising said compound additionally contains a cationic photoinitiator, a surface control agent and a surface modifier.

Patent Literature 3 describes a curable composition containing 5-80 parts by weight of a cationically polymerizable compound having an aromatic ring and 20-95 parts by weight of a cationically polymerizable compound having no aromatic ring.

Patent Literature 4 describes a thermosetting hard coat composition comprising a poly(methyl)glycidylether compound and a cationic polymerizable group-containing silsesquioxane compound.

### CITATION LIST

### PATENT LITERATURE

Patent Literature 1: JP 2010-515778 A
Patent Literature 2: US 2016/297933 A1
Patent Literature 3: JP 2004 285248 A
Patent Literature 4: JP 2009 256563 A

### SUMMARY OF INVENTION

The present disclosure relates to a hard coat layer-forming composition used to form a hard coat layer on or above a base, the hard coat layer-forming composition comprising: a compound having a plurality of epoxy groups; a silsesquioxane compound having an oxetanyl group; a photo-cationic polymerization initiator; and a thermal-cationic polymerization initiator, wherein an amount of the silsesquioxane compound having an oxetanyl group based on a total mass of the compound having a plurality of epoxy groups and the silsesquioxane compound having an oxetanyl group is more than 70 mass%.

The present disclosure also relates to a spectacle lens, comprising: a spectacle lens base; and a hard coat layer formed using the hard coat layer-forming composition above and disposed on or above the spectacle lens base.

### BRIEF DESCRIPTION OF DRAWINGS

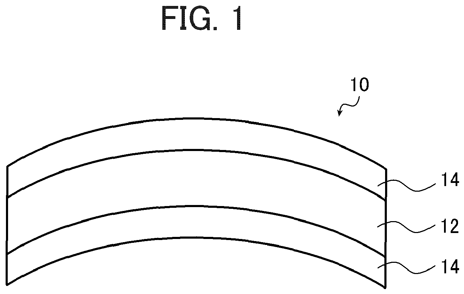

[FIG. 1] FIG. 1 is a cross-sectional view of one embodiment of a spectacle lens.

### DESCRIPTION OF EMBODIMENTS

When a hard coat layer is provided on or above a spectacle lens base using a hard coat layer-forming composition described in Patent Literature 1 to thereby produce a spectacle lens, the surface profile of the spectacle lens base on or above which the hard coat layer has been formed differs from that before formation of the hard coat layer due to stress of the formed hard coat layer. This has been a problem. When such a surface profile change is large, the power of the spectacle lens base set in advance changes due to formation of the hard coat layer. In particular, this problem is significantly serious when the hard coat layer is thick.

To cope with it, there is a demand for a hard coat layer-forming composition capable of forming a hard coat layer that causes only a small change of surface profile of the base surface on or above which the hard coat layer is formed, as well as having excellent abrasion resistance.

A hard coat layer-forming composition according to the embodiment is described below in detail.

In the description, numerical values given before and after "to" are included as the lower and upper limits.

In the hard coat layer-forming composition, a compound having a plurality of epoxy groups and a silsesquioxane compound having an oxetanyl group are contained at a predetermined ratio, and a photo-cationic polymerization initiator and a thermal-cationic polymerization initiator are used in combination. As described later in detail, when the hard coat layer-forming composition composed as above is subjected to two-stage curing treatment including heating treatment and light irradiation treatment, a hard coat layer exhibiting desired properties is formed. Note that, when the surface profile change of the base surface on or above which the hard coat layer is formed is small, it can be said that, in other words, stress of the hard coat layer is small.

A hard coat layer obtained from the hard coat layer-forming composition has excellent transparency and excellent adhesion with a spectacle lens base. When an antireflection film is disposed on the hard coat layer, excellent abrasion resistance is still maintained.

The hard coat layer-forming composition is a composition for forming a hard coat layer on or above a base.

First, components contained in the hard coat layer-forming composition are described in detail.

### <Compound Having Plurality of Epoxy Groups>

The hard coat layer-forming composition contains a compound having a plurality of epoxy groups (hereinafter also simply called "polyfunctional epoxy compound"). Epoxy groups in the polyfunctional epoxy compound are easily ring-opened with a cation and therefore contribute to acceleration of reaction in the early stage of polymerization during curing treatment to be described later.

The epoxy group is a group represented by Formula (1) below. R¹ denotes a hydrogen atom or an alkyl group (e.g., methyl group, ethyl group, propyl group). * denotes a bonding position.

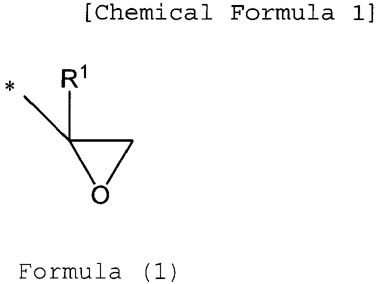

The polyfunctional epoxy compound contains a plurality of (at least two) epoxy groups. The number of the epoxy groups is not particularly limited and may typically be 2 to 6 or 2 to 3.

The type of the polyfunctional epoxy compound is not particularly limited, and known polyfunctional epoxy compounds are usable. Examples of the polyfunctional epoxy compound include a bisphenol A type epoxy compound, a bisphenol F type epoxy compound, a phenol novolac type epoxy compound, a cresol novolac type epoxy compound and an aliphatic glycidyl ether type epoxy compound.

One example of the polyfunctional epoxy compound is the compound represented by Formula (2).

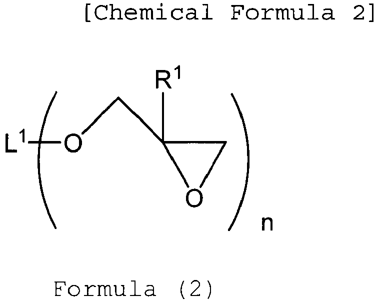

L¹ denotes an n-valent hydrocarbon group that may include an oxygen atom. The number of carbon atoms in the hydrocarbon group is not particularly limited and may be 3 to 30 or 3 to 10 for the sake of handleability of the polyfunctional epoxy compound.

The hydrocarbon group may have any of a linear, branched and cyclic structures and a combination structure thereof. The hydrocarbon group may be any of an aliphatic hydrocarbon group, an aromatic hydrocarbon group and a combination group thereof.
n denotes a number of 2 or more and may be 2 to 6 or 2 to 3 for the sake of handleability of the polyfunctional epoxy compound. For instance, when n is 2, L is a divalent hydrocarbon group that may include an oxygen atom (e.g., an alkylene group that may include an oxygen atom).

R¹ denotes a hydrogen atom or an alkyl group (e.g., methyl group, ethyl group, propyl group).

One exemplary compound represented by Formula (2) above is an aliphatic glycidyl ether type epoxy compound obtained through the reaction of at least one selected from the group consisting of ethylene glycol, diethylene glycol, triethylene glycol, tetraethylene glycol, polyethylene glycol, propylene glycol, dipropylene glycol, tripropylene glycol, tetrapropylene glycol, polypropylene glycol, trimethylene glycol, 1,2-butanediol, 1,3-butanediol, 1,4-butanediol, 2,3-butanediol, polybutylene glycol, 1,5-pentanediol, neopentyl glycol, 1,6-hexanediol, 1,4-cyclohexanedimethanol, glycerol, diglycerol, polyglycerol, trimethylolpropane, pentaerythritol, sorbitol and arabitol, with epichlorohydrin.

### <Silsesquioxane Compound Having Oxetanyl Group>

The hard coat layer-forming composition contains a silsesquioxane compound having an oxetanyl group.

The oxetanyl group is a group represented by Formula (3) below. R² denotes a hydrogen atom or an alkyl group (e.g., methyl group, ethyl group, propyl group). * denotes a bonding position.

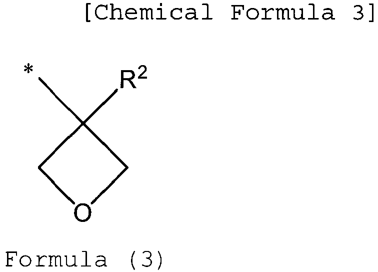

Typically, the silsesquioxane compound is a silane compound having the basic structure represented by Formula (4) as obtained through hydrolysis of a trifunctional silane compound such as alkoxysilane, chlorosilane or silanol. Known examples of the structure of the silsesquioxane compound include, in addition to an irregular form called a random structure, a ladder structure, a cage type (completely condensed cage type) structure, and an incomplete cage type structure (which is a partially cleaved structure of cage type structure; e.g., a structure lacking part of silicon atoms in a cage type structure, a structure in which a silicon-oxygen bond is cleaved in part of a cage type structure).

In formula (4) below, R³ denotes an organic group.

Formula (4) R³-SiO_{3/2}

The structure of the silsesquioxane compound having an oxetanyl group is not particularly limited and may be any of the random structure, the ladder structure, the cage type structure, the incomplete cage type structure, and combinations of plural structures.

The equivalent of oxetanyl group contained in the silsesquioxane compound is not particularly limited and may be 50 to 500 g/eq or 150 to 300 g/eq because the resulting hard coat layer can have more excellent hardness.

The silsesquioxane compound having an oxetanyl group may be obtained through synthesis by a known method or may be a commercial product. Exemplary commercial products include OX-SQ TX-100, OX-SQ SI-20, and OX-SQ HDX manufactured by Toagosei Co., Ltd.

### <Photo-cationic Polymerization Initiator>

The hard coat layer-forming composition contains a photo-cationic polymerization initiator. The photo-cationic polymerization initiator is a compound that generates cations (e.g., acid) upon exposure to light such as a visible ray or a UV ray.

The type of the photo-cationic polymerization initiator is not particularly limited, and known photo-cationic polymerization initiators are usable. Examples of the photo-cationic polymerization initiator include onium salts such as iodonium salts (e.g., aromatic iodonium salt) and sulfonium salts (e.g., aromatic sulfonium salt), halogen-containing compounds such as s-triazine derivatives, sulfone compounds, sulfonic acid compounds, sulfonimide compounds, and diazomethane compounds. Of these, an aromatic sulfonium salt may be employed as the photo-cationic polymerization initiator for the sake of curing properties.

The aromatic sulfonium salt is a compound having a triarylsulfonium cation and an anion (negative ion).

As the triarylsulfonium cation, for example, a triphenylsulfonium cation having an alkyl group, a thioether group, an ether group or the like as a substituent is usable. Specific examples of the triarylsulfonium cation include a diphenyl[4-(phenylthio)phenyl]sulfonium cation, a triphenylsulfonium cation, and an alkyltriphenylsulfonium cation.

Examples of the anion include a hexafluorophosphate anion (PF₆⁻), a hexafluoroantimonate anion (SbF₆⁻), a pentafluorohydroxyantimonate anion (SbF₅(OH)⁻), a hexafluoroarsenate anion (AsF₆⁻), a tetrafluoroborate anion (BF₄₋), and a tetrakis(pentafluorophenyl)borate anion (B(C₆F₅)₄⁻).

For the aromatic sulfonium salt, commercial products such as ADEKA OPTOMER SP-150, SP-170 and SP-171 of ADKA Corporation are usable.

### <Thermal-cationic Polymerization Initiator (Thermal Latent Cationic Polymerization Initiator)>

The hard coat layer-forming composition contains a thermal-cationic polymerization initiator. The thermal-cationic polymerization initiator is a compound that is cleaved and generates cations (e.g., acid) upon reaching the critical temperature when heated.

The type of the thermal-cationic polymerization initiator is not particularly limited, and known thermal-cationic polymerization initiators are usable. Examples of the thermal-cationic polymerization initiator include onium salts such as sulfonium salts, anilinium salts, pyridinium salts, toluidinium salts, phosphonium salts and iodonium salts. Those onium salts contain anions such as a hexafluorophosphate anion (PF₆⁻), a tetrafluoroborate anion (BF₄⁻), a hexafluoroantimonate anion (SbF₆⁻) and a hexafluoroarsenate anion (AsF₆⁻).

For the thermal-cationic polymerization initiator, commercial products such as ADEKA OPTORON CP-66 of ADKA Corporation are usable.

### <Other Components>

The hard coat layer-forming composition may contain other components than the above-described components (the compound having a plurality of epoxy groups, the silsesquioxane compound having an oxetanyl group, the photo-cationic polymerization initiator, and the thermal-cationic polymerization initiator).

### (Metal Oxide Particles)

The hard coat layer-forming composition may contain metal oxide particles.

The type of the metal oxide particles is not particularly limited, and known metal oxide particles are usable. One example of the metal oxide particles is particles of an oxide of at least one metal selected from Si, Al, Sn, Sb, Ta, Ce, La, Fe, Zn, W, Zr, In and Ti. In particular, the metal oxide particles may be particles of a Si-containing oxide (silicon oxide particles), particles of a Sn-containing oxide (tin oxide particles), particles of a Zr-containing oxide (zirconium oxide particles), or particles of a Ti-containing oxide (titanium oxide particles) for the sake of handleability.

The metal oxide particles may contain, among the metals listed above, one metal (one type of metallic atoms) alone or two or more metals (two or more types of metallic atoms) .

The average particle size of the metal oxide particles is not particularly limited and may be 1 to 200 nm or 5 to 30 nm, for instance. When the average particle size is within the above range, the metal oxide particles exhibit excellent dispersion stability in the hard coat layer-forming composition, while whitening of the resulting cured product can be further suppressed.

The average particle size above is determined by measuring the diameters of at least one hundred metal oxide particles with a transmitted light microscope and calculating the arithmetic mean of the measurements. When the metal oxide particles do not have a perfect circle shape, the major axis length is regarded as the diameter.

Various functional groups (e.g., epoxy group) may optionally be introduced to the surfaces of the metal oxide particles.

### (At Least One Selected from Group Consisting of Hydrolyzable Silicon Compound, Hydrolysate Thereof and Hydrolyzed Condensate Thereof (Hereinafter Also Simply Called "Hydrolyzable Silicon Compound(s)"))

The hard coat layer-forming composition may contain at least one selected from the group consisting of a hydrolyzable silicon compound, a hydrolysate thereof, and a hydrolyzed condensate thereof.

The hydrolyzable silicon compound refers to a compound in which a hydrolyzable group is bonded to a silicon atom, and a silane coupling agent described below is also categorized as the hydrolyzable silicon compound.

One example of the hydrolyzable silicon compound is the compound represented by Formula (5).

Formula (5) Si(R⁴)₄

R⁴ denotes a hydrolyzable group. The hydrolyzable group is directly bonded to Si (silicon atom) and may promote a hydrolysis reaction and/or a condensation reaction. Examples of the hydrolyzable group include an alkoxy group, a halogen atom, an acyloxy group, an alkenyloxy group and an isocyanate group.

Another example of the hydrolyzable silicon compound is a silane coupling agent. The silane coupling agent is a hydrolyzable silicon compound having a functional group (preferably, reactive group) such as a vinyl group, an epoxy group, an amino group, a (meth)acrylic group, a mercapto group or an isocyanate group.

The type of the silane coupling agent is not particularly limited, and known silane coupling agents are usable. Examples of the silane coupling agent include an epoxy silane coupling agent, an amino silane coupling agent, a (meth)acrylic silane coupling agent, a mercapto silane coupling agent and a vinyl silane coupling agent.

The term "(meth)acrylic" refers to acrylic or methacrylic.

A preferred example of the silane coupling agent is the compound represented by Formula (6).

Formula (6) X-Si(R⁴)₃

X denotes a group having a reactive group. Examples of the reactive group include a vinyl group, an epoxy group, an amino group, a (meth)acrylic group and a mercapto group. More specifically, X may be the group represented by R⁵-L²-. R⁵ denotes a reactive group, and L² denotes a divalent linking group (preferably, an alkylene group that may include a heteroatom (e.g., oxygen atom)).

R⁴ denotes a hydrolyzable group. The definition of the hydrolyzable group is as described above.

A hydrolysate of the hydrolyzable silicon compound refers to a compound obtained through hydrolysis of one or more hydrolyzable groups in the hydrolyzable silicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate or a mixture thereof.

A hydrolyzed condensate of the hydrolyzable silicon compound refers to a compound obtained through hydrolysis of one or more hydrolyzable groups in the hydrolyzable silicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate or a mixture thereof.

### (Solvent)

The hard coat layer-forming composition may contain a solvent.

The solvent may be water or an organic solvent.

The type of the organic solvent is not particularly limited, and examples thereof include an alcoholic solvent, a ketone solvent, an ether solvent, an ester solvent, a hydrocarbon solvent, a halogenated hydrocarbon solvent, an amide solvent, a sulfone solvent and a sulfoxide solvent.

The hard coat layer-forming composition may optionally contain various additives such as a UV absorber, an antiaging agent, a coating adjusting agent, a light stabilizer, an antioxidant, a discoloration preventing agent, a dye, a filler and an internal mold release agent.

### <Hard Coat Layer-Forming Composition>

The hard coat layer-forming composition contains various components as described above.

The producing method of the hard coat layer-forming composition is not particularly limited; for example, the foregoing components may be mixed at one time or in separate steps.

When the hydrolyzable silicon compound as above is used, a method in which a hydrolysis reaction and a condensation reaction of the hydrolyzable silicon compound are allowed to proceed to thereby produce a hydrolysate and/or a hydrolyzed condensate and subsequently the hydrolysate and/or the hydrolyzed condensate are mixed with other components may be employed, for example.

The amount of the polyfunctional epoxy compound in the hard coat layer-forming composition is not particularly limited, and may be 1 to 15 mass% or 1 to 10 mass% based on the total solids of the hard coat layer-forming composition (hard coat layer constituents) because this brings about excellent abrasion resistance and appearance characteristics of the resulting hard coat layer as well as high curing reaction rate.

The total solids (hard coat layer constituents) refer to components that constitute a hard coat layer formed through curing treatment and correspond to, inter alia, the polyfunctional epoxy compound, the silsesquioxane compound having an oxetanyl group, the photo-cationic polymerization initiator and the thermal-cationic polymerization initiator as described above, while the solvent is not included in the total solids. Even if a component is a liquid, this component is accounted as a solid as long as this is a constituent of a hard coat layer.

The amount of the silsesquioxane compound having an oxetanyl group in the hard coat layer-forming composition is not particularly limited, and may be 35 to 70 mass% or 35 to 60 mass% based on the total solids of the hard coat layer-forming composition because this brings about more excellent abrasion resistance and low stress of the resulting hard coat layer.

The amount of the photo-cationic polymerization initiator in the hard coat layer-forming composition is not particularly limited, and may be 0.1 to 3.0 mass% or 0.2 to 1.5 mass% based on the total solids of the hard coat layer-forming composition because this brings about more excellent abrasion resistance of the resulting hard coat layer.

The amount of the thermal-cationic polymerization initiator in the hard coat layer-forming composition is not particularly limited, and may be 0.1 to 3.0 mass% or 0.2 to 1.5 mass% based on the total solids of the hard coat layer-forming composition because this brings about more excellent adhesion between the resulting hard coat layer and the base.

When the metal oxide particles are contained in the hard coat layer-forming composition, The amount of the metal oxide particles therein is not particularly limited, and may be 25 to 60 mass%, 30 to 50 mass%, or 35 to 50 mass% based on the total solids of the hard coat layer-forming composition because this brings about more excellent abrasion resistance of the resulting hard coat layer.

When the hydrolyzable silicon compound(s) is contained in the hard coat layer-forming composition, the amount of the hydrolyzable silicon compound(s) therein is not particularly limited, and may be less than 10 mass% or less than 7 mass% based on the total solids of the hard coat layer-forming composition because this brings about more excellent adhesion between the resulting hard coat layer and the base.

In calculation of the amount of the hydrolyzable silicon compound(s), the amount is calculated based on the mass of a hydrolyzed condensate (completely hydrolyzed condensate) of the compound. For instance, when a hydrolyzable silicon compound such as 3-glycidoxypropyltrimethoxysilane is used, the mass of a completely hydrolyzed condensate obtained upon progress of a hydrolysis reaction and a condensation reaction of the hydrolyzable silicon compound is regarded as the mass of the hydrolyzable silicon compound. Therefore, when the mass of total solids is calculated, the mass of the hydrolyzed condensate as above is used.

The amount of the silsesquioxane compound having an oxetanyl group based on the total mass of the polyfunctional epoxy compound and the silsesquioxane compound having an oxetanyl group is more than 70 mass%, and may be not less than 80 mass% or not less than 85 mass% because this brings about more excellent abrasion resistance and appearance characteristics of the resulting hard coat layer. The upper limit thereof is not particularly limited and may be not more than 98 mass%. When the amount thereof is 70 mass% or less, the resulting hard coat layer have lower hardness, thus leading to poor abrasion resistance, as well as poor appearance characteristics.

The total mass of the polyfunctional epoxy compound and the silsesquioxane compound having an oxetanyl group based on the total solids of the hard coat layer-forming composition is not particularly limited, and may be 35 to 70 mass% because this brings about excellent abrasion resistance of the resulting hard coat layer.

The hard coat layer-forming composition is a composition for forming a hard coat layer on or above a base.

Examples of a material forming the base include plastic (resin) and glass.

In particular, as the base, a plastic base is favorable.

Examples of the plastic base include a plastic spectacle lens base and a plastic film.

In the latter part, an embodiment in which the hard coat layer-forming composition is applied onto the plastic spectacle lens base is described in detail as an example.

### <Spectacle Lens>

FIG. 1 is a cross-sectional view of one embodiment of a spectacle lens.

A spectacle lens 10 shown in FIG. 1 includes a plastic spectacle lens base 12 and hard coat layers 14 separately disposed on the opposite sides of the plastic spectacle lens base 12. The hard coat layers 14 are layers formed from the hard coat layer-forming composition described above.

While each hard coat layer 14 is disposed in direct contact with the plastic spectacle lens base 12 in FIG. 1, the invention is not limited thereto, and another layer (e.g., a primer layer) may be disposed between the plastic spectacle lens base 12 and the hard coat layer 14. That is, the hard coat layer 14 may be disposed directly on or indirectly, via another layer, above the plastic spectacle lens base 12.

In addition, while the hard coat layers 14 are separately disposed on the opposite sides of the plastic spectacle lens base 12 in FIG. 1, the hard coat layer 14 may be disposed only on one side of the plastic spectacle lens base 12.

Members included in the spectacle lens 10 are described below in detail.

### (Plastic Spectacle Lens Base)

The plastic spectacle lens base is not particularly limited in type, and one example thereof is a finished lens that is obtained through optical finishing of both the convex and concave surfaces and shaping according to a desired power.

Plastic (so-called resin) constituting the plastic spectacle lens base is not particularly limited in type, and examples thereof include (meth)acrylic resin, thiourethane resin, allyl resin, episulfide resin, polycarbonate resin, polyurethane resin, polyester resin, polystyrene resin, polyethersulfone resin, poly-4-methylpentene-1 resin, diethylene glycol bis(allyl carbonate) resin (CR-39), and polyvinyl chloride resin.

The thickness of the plastic spectacle lens base is not particularly limited and, in most cases, falls within the range from about 1 to about 30 mm for the sake of handleability.

The refractive index of the plastic spectacle lens base is not particularly limited.

A plastic spectacle lens base having a refractive index of 1.70 or more is often a plastic spectacle lens base having a low glass transition temperature. Meanwhile, the use of the hard coat layer-forming composition as above makes it possible to form a desired hard coat layer owing to the combination of low temperature curing treatment and light irradiation treatment, and thus, a hard coat layer can be readily produced even on or above such a plastic spectacle lens base having a high refractive index (plastic spectacle lens base having a low glass transition temperature). The refractive index above refers to the refractive index at a wavelength of 546.07 nm.

The plastic spectacle lens base need not be transparent as long as it is translucent, and may be colored.

### (Hard Coat Layer)

The hard coat layer is a layer disposed on or above the plastic spectacle lens base and imparting scratch resistance to the plastic spectacle lens base.

The hard coat layer is a layer formed from the hard coat layer-forming composition described above.

One exemplary formation method of the hard coat layer is a method involving applying the hard coat layer-forming composition described above onto the plastic spectacle lens base to form a coating and subjecting the coating to heating treatment and then light irradiation treatment.

As described above, first, the coating is subjected to heating treatment to cleave the thermal-cationic polymerization initiator in the coating, thereby partially reacting polyfunctional epoxy compounds with silsesquioxane compounds having oxetanyl groups. In this process, the polyfunctional epoxy compounds act to accelerate the reaction in the early stage of polymerization. Since heating treatment is performed prior to light irradiation treatment, curing shrinkage of the coating are further suppressed.

Next, the coating having undergone heating treatment is subjected to light irradiation treatment to cleave the photo-cationic polymerization initiator, thereby further reacting polyfunctional epoxy compounds with silsesquioxane compounds having oxetanyl groups. Polymerization proceeds mainly between silsesquioxane compounds having oxetanyl groups during light irradiation treatment, whereby a three-dimensional crosslinked structure is formed.

Thus, by performing two-stage curing treatment including heating treatment and light irradiation treatment, a hard coat layer exhibiting desired properties can be formed.

The method of applying the hard coat layer-forming composition onto the plastic spectacle lens base is not particularly limited, and known methods (e.g., dip coating, spin coating, spray coating, ink jet coating and flow coating) are usable. When dip coating is employed for instance, the plastic spectacle lens base is immersed in the hard coat layer-forming composition and then pulled out and dried, whereby a coating with a predetermined coating thickness can be formed on the plastic spectacle lens base.

The coating thickness of the coating formed on or above the plastic spectacle lens base is not particularly limited and suitably selected to allow the resulting hard coat layer to have a predetermined coating thickness.

The conditions for heating treatment are not particularly limited, and the optimal conditions are selected according to the type of the thermal-cationic polymerization initiator for use.

The heating temperature may be 30°C to 100°C or 50°C to 90°C, and the heating time may be 5 to 360 minutes or 10 to 40 minutes.

The conditions for light irradiation treatment are not particularly limited, and suitable conditions are selected according to the type of the photo-cationic polymerization initiator for use.

The light for light irradiation is not particularly limited in type, and examples thereof include a UV ray and a visible ray. The light source may be, for example, a high-pressure mercury vapor lamp.

The cumulative light quantity during light irradiation is not particularly limited, and may be 100 to 3,000 mJ/cm² or 100 to 1,500 mJ/cm² for the sake of productivity and curing properties of the coating.

The coating thickness of the hard coat layer is not particularly limited, and may be not less than 0.5 µm or not less than 1.5 µm, for instance. In particular, even when the hard coat layer as above has a relatively large coating thickness, e.g., 10 µm or more, the surface profile change of the base surface on or above which the hard coat layer is formed is small. The upper limit of the coating thickness may be not more than 20 µm, for instance.

The above coating thickness is the average coating thickness, which is determined by measuring the coating thickness of the hard coat layer at given five points and calculating the arithmetic mean of the measurements.

The plastic spectacle lens is not limited to the embodiment shown in FIG. 1 and may further have an antireflection film on the hard coat layer.

The antireflection film constitutes a layer having a function of preventing the reflection of incident light. Specifically, the antireflection film may have low reflection characteristics over the entire visible range from 400 nm to 700 nm (wide-band low reflection characteristics).

The antireflection film is not particularly limited in structure and may be of a single layer structure or a multilayer structure.

In the case of multilayer structure, it is preferable to have the structure in which a low refractive index layer(s) and a high refractive index layer(s) are alternately stacked. Exemplary materials that may be used to form the high refractive index layer include oxides of titanium, zircon, aluminum, tantalum and lanthanum. Exemplary materials that may be used to form the low refractive index layer include oxides such as silica.

The producing method of the antireflection film is not particularly limited, and examples thereof include dry methods such as vacuum evaporation, sputtering, ion plating, ion-beam assisted deposition and CVD.

### EXAMPLES

The hard coat layer-forming composition is described below in further detail by way of examples and comparative examples; however, the invention should not be construed as being limited to the following examples.

### <Example 1>

Butyl cellosolve (1.3 kg), 3-glycidoxypropyltrimethoxysilane (KBM-403, manufactured by Shin-Etsu Chemical Co., Ltd.) (270 g) as a hydrolyzable silicon compound, and polyether-modified silicone (8032 Additive, manufactured by Dow Corning Toray Co., Ltd.) (6 g) as a coating adjusting agent were charged into a brown bottle, and then 0.1 N aqueous hydrochloric acid solution (74 g) was added into the brown bottle. The resulting mixture was stirred for 12 hours at room temperature.

To the resulting mixture, methanol-dispersed colloidal silica (OSCAL-1132, manufactured by JGC Catalysts and Chemicals Ltd.) (6.3 kg), 1,6-hexanediol diglycidyl ether (DENACOL EX-212, manufactured by Nagase ChemteX Corporation) (80 g) as a polyfunctional epoxy compound, and silsesquioxane having an oxetanyl group (OX-SQ TX-100, manufactured by Toagosei Co., Ltd.) (1.85 kg) were further added, and the resulting mixture was stirred for 6 hours. Subsequently, to the resulting mixture, a hydroxyphenyl triazine UV absorber (Tinuvin 477, manufactured by BASF Japan Ltd.) (80 g), a thermal-cationic polymerization initiator (ADEKA OPTORON CP-66, manufactured by ADEKA Corporation) (25 g), and a photo-cationic polymerization initiator (ADEKA OPTOMER SP-171, manufactured by ADEKA Corporation) (30 g) were further added, and the resulting mixture was stirred, thereby obtaining a hard coat layer-forming composition 1.

A lens (Nikon Lite AS material S-3.00D, manufactured by Nikon-Essilor Co., Ltd.) with a refractive index of 1.60 was used as a plastic spectacle lens base.

The hard coat layer-forming composition 1 was applied on one surface of the plastic spectacle lens base by spin coating. Specifically, the plastic spectacle lens base was rotated at 300 rpm for 10 seconds, during which 2 ml of the hard coat layer-forming composition 1 was dropped thereon over the range from the center of the plastic spectacle lens base to the outer circumference thereof. Thereafter, the plastic spectacle lens base applied with the hard coat layer-forming composition 1 was rotated at 1,000 rpm for 5 seconds, thereby obtaining a coating-bearing plastic spectacle lens base.

Next, the obtained coating-bearing plastic spectacle lens base was heated at 80°C for 20 minutes, and then the coating was irradiated with UV light (cumulative light quantity: 1,200 mJ/cm²) using a high-pressure mercury vapor lamp (80 W/cm²) as a light source, thereby forming a hard coat layer. The obtained hard coat layer had a coating thickness of 10 µm.

The same treatment as above was performed also on the other surface of the plastic spectacle lens base, whereby a hard coat layer-bearing plastic spectacle lens base was obtained in which the hard coat layers were separately disposed on the opposite sides of the plastic spectacle lens base.

The obtained hard coat layer-bearing plastic spectacle lens base was set on a rotatable dome installed in a vacuum tank, the temperature inside the vacuum tank was increased to 70°C, and air was discharged to a pressure of 1.0 x 10⁻³ Pa. Subsequently, one of the hard coat layers was subjected to Ar ion beam cleaning for 60 seconds under conditions of an accelerating voltage of 500 V and an accelerating current of 100 mA. Thereafter, a first layer SiO₂ (refractive index: 1.47) with an optical thickness of 0.090 λ, a second layer ZrO₂ (refractive index: 2.00) with an optical thickness of 0.038 λ, a third layer SiO₂ (refractive index: 1.47) with an optical thickness of 0.393 λ, a fourth layer ZrO₂ (refractive index: 2.00) with an optical thickness of 0.104 λ, a fifth layer SiO₂ (refractive index: 1.47) with an optical thickness of 0.069 λ, a sixth layer ZrO₂ (refractive index: 2.00) with an optical thickness of 0.289 λ, and a seventh layer SiO₂ (refractive index: 1.47) with an optical thickness of 0.263 λ were sequentially stacked on the cleaned hard coat layer, thereby forming an antireflection film. λ denoting the central wavelength in the design was set to 500 nm.

The same treatment as above was performed also on the other hard coat layer, whereby the antireflection films were separately formed on the opposite sides of the hard coat layer-bearing plastic spectacle lens base. Thus, an antireflection film-bearing plastic spectacle lens base (corresponding to a spectacle lens) was obtained.

### <Example 2>

Butyl cellosolve (10.0 kg), 3-glycidoxypropyltrimethoxysilane (KBM-403, manufactured by Shin-Etsu Chemical Co., Ltd.) (270 g) as a hydrolyzable silicon compound, and polyether-modified silicone (L-7001, manufactured by Dow Corning Toray Co., Ltd.) (6 g) as a coating adjusting agent were charged into a brown bottle, and then 0.1 N aqueous hydrochloric acid solution (74 g) was added into the brown bottle. The resulting mixture was stirred for 12 hours at room temperature.

To the resulting mixture, methanol-dispersed colloidal titanium (OPTOLAKE 1130Z S-25 A8, manufactured by JGC Catalysts and Chemicals Ltd.) (6.3 kg), 1,6-hexanediol diglycidyl ether (DENACOL EX-212, manufactured by Nagase ChemteX Corporation) (80 g) as a polyfunctional epoxy compound, and silsesquioxane having an oxetanyl group (OX-SQ SI-20, manufactured by Toagosei Co., Ltd.) (1.85 kg) were further added, and the resulting mixture was stirred for 6 hours. Subsequently, to the resulting mixture, an antiaging agent (ANTAGE BHT, manufactured by Kawaguchi Chemical Industry Co., Ltd.) (20 g), a thermal-cationic polymerization initiator (ADEKA OPTORON CP-66, manufactured by ADEKA Corporation) (30 g), and a photo-cationic polymerization initiator (ADEKA OPTOMER SP-150, manufactured by ADEKA Corporation) (20 g) were further added, and the resulting mixture was stirred, thereby obtaining a hard coat layer-forming composition 2.

A lens (Nikon Lite AS material S-3.00D, manufactured by Nikon-Essilor Co., Ltd.) with a refractive index of 1.67 was used as a plastic spectacle lens base.

The hard coat layer-forming composition 2 was applied on the surfaces of the plastic spectacle lens base by dip coating. Specifically, the plastic spectacle lens base was immersed in the hard coat layer-forming composition 2 and then pulled out at 200 mm/min, thereby obtaining a coating-bearing plastic spectacle lens base.

Next, the obtained coating-bearing plastic spectacle lens base was heated at 70°C for 20 minutes, and then the coating was irradiated with UV light (cumulative light quantity: 1,000 mJ/cm²) using a high-pressure mercury vapor lamp (80 W/cm²) as a light source, whereby a hard coat layer-bearing plastic spectacle lens base was obtained in which hard coat layers were separately disposed on the opposite sides of the plastic spectacle lens base. The obtained hard coat layers had a coating thickness of 2.5 µm.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

### <Example 3>

Butyl cellosolve (1.5 kg), 3-glycidoxypropyltrimethoxysilane (KBM-403, manufactured by Shin-Etsu Chemical Co., Ltd.) (270 g) as a hydrolyzable silicon compound, and polyether-modified silicone (L-7001, manufactured by Dow Corning Toray Co., Ltd.) (4 g) as a coating adjusting agent were charged into a brown bottle, and then 0.1 N aqueous hydrochloric acid solution (74 g) was added into the brown bottle. The resulting mixture was stirred for 12 hours at room temperature.

To the resulting mixture, methanol-dispersed colloidal silica (OSCAL-1132, manufactured by JGC Catalysts and Chemicals Ltd.) (6.3 kg), diglycerol polyglycidyl ether (DENACOL EX-421, manufactured by Nagase ChemteX Corporation) (670 g) as a polyfunctional epoxy compound, and silsesquioxane having an oxetanyl group (OX-SQ TX-100, manufactured by Toagosei Co., Ltd.) (1.87 kg) were further added, and the resulting mixture was stirred for 6 hours. Subsequently, to the resulting mixture, a benzotriazole UV absorber (Tinuvin 1130, manufactured by BASF Japan Ltd.) (70 g), a thermal-cationic polymerization initiator (ADEKA OPTORON CP-66, manufactured by ADEKA Corporation) (15 g), and a photo-cationic polymerization initiator (SAN-AID SI-100L, manufactured by Sanshin Chemical Industry Co., Ltd.) (30 g) were further added, and the resulting mixture was stirred, thereby obtaining a hard coat layer-forming composition 3.

A lens (Nikon Lite AS material S-3.00D, manufactured by Nikon-Essilor Co., Ltd.) with a refractive index of 1.60 was used as a plastic spectacle lens base.

The hard coat layer-forming composition 3 was applied on the surfaces of the plastic spectacle lens base by dip coating. Specifically, the plastic spectacle lens base was immersed in the hard coat layer-forming composition 3 and then pulled out at 400 mm/min, thereby obtaining a coating-bearing plastic spectacle lens base.

Next, the obtained coating-bearing plastic spectacle lens base was heated at 80°C for 20 minutes, and then the coating was irradiated with UV light (cumulative light quantity: 1,500 mJ/cm²) using a high-pressure mercury vapor lamp (80 W/cm²) as a light source, whereby a hard coat layer-bearing plastic spectacle lens base was obtained in which hard coat layers were separately disposed on the opposite sides of the plastic spectacle lens base. The obtained hard coat layers had a coating thickness of 8.5 µm.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

### <Example 4>

Butyl cellosolve (1.5 kg), 3-glycidoxypropyltrimethoxysilane (KBM-403, manufactured by Shin-Etsu Chemical Co., Ltd.) (270 g) as a hydrolyzable silicon compound, and polyether-modified silicone (L-7001, manufactured by Dow Corning Toray Co., Ltd.) (3 g) as a coating adjusting agent were charged into a brown bottle, and then 0.1 N aqueous hydrochloric acid solution (74 g) was added into the brown bottle. The resulting mixture was stirred for 12 hours at room temperature.

To the resulting mixture, methanol-dispersed colloidal silica (OSCAL-1132, manufactured by JGC Catalysts and Chemicals Ltd.) (3.5 kg), diglycerol polyglycidyl ether (DENACOL EX-313, manufactured by Nagase ChemteX Corporation) (80 g) as a polyfunctional epoxy compound, and silsesquioxane having an oxetanyl group (OX-SQ TX-100, manufactured by Toagosei Co., Ltd.) (1.85 kg) were further added, and the resulting mixture was stirred for 6 hours. Subsequently, to the resulting mixture, a hydroxyphenyl triazine UV absorber (Tinuvin 400, manufactured by BASF Japan Ltd.) (60 g), a thermal-cationic polymerization initiator (ADEKA OPTORON CP-66, manufactured by ADEKA Corporation) (25 g), and a photo-cationic polymerization initiator (ADEKA OPTOMER SP-150, manufactured by ADEKA Corporation) (25 g) were further added, and the resulting mixture was stirred, thereby obtaining a hard coat layer-forming composition 4.

A lens (Nikon Lite AS material S-3.00D, manufactured by Nikon-Essilor Co., Ltd.) with a refractive index of 1.60 was used as a plastic spectacle lens base.

The hard coat layer-forming composition 4 was applied on the surfaces of the plastic spectacle lens base by dip coating. Specifically, the plastic spectacle lens base was immersed in the hard coat layer-forming composition 4 and then pulled out at 400 mm/min, thereby obtaining a coating-bearing plastic spectacle lens base.

Next, the obtained coating-bearing plastic spectacle lens base was heated at 80°C for 20 minutes, and then the coating was irradiated with UV light (cumulative light quantity: 1,500 mJ/cm²) using a high-pressure mercury vapor lamp (80 W/cm²) as a light source, whereby a hard coat layer-bearing plastic spectacle lens base was obtained in which hard coat layers were separately disposed on the opposite sides of the plastic spectacle lens base. The obtained hard coat layers had a coating thickness of 9 µm.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

### <Example 5>

Butyl cellosolve (1.5 kg), 3-glycidoxypropyltrimethoxysilane (KBM-403, manufactured by Shin-Etsu Chemical Co., Ltd.) (600 g) as a hydrolyzable silicon compound, and polyether-modified silicone (8032 Additive, manufactured by Dow Corning Toray Co., Ltd.) (10 g) as a coating adjusting agent were charged into a brown bottle, and then 0.1 N aqueous hydrochloric acid solution (165 g) was added into the brown bottle. The resulting mixture was stirred for 12 hours at room temperature.

To the resulting mixture, methanol-dispersed colloidal silica (OSCAL-1132, manufactured by JGC Catalysts and Chemicals Ltd.) (6.3 kg), 1,6-hexanediol diglycidyl ether (DENACOL EX-212, manufactured by Nagase ChemteX Corporation) (150 g) as a polyfunctional epoxy compound, and silsesquioxane having an oxetanyl group (OX-SQ TX-100, manufactured by Toagosei Co., Ltd.) (1.85 kg) were further added, and the resulting mixture was stirred for 6 hours. Subsequently, to the resulting mixture, an antiaging agent (ANTAGE CRYSTAL, manufactured by Kawaguchi Chemical Industry Co., Ltd.) (200 g), a thermal-cationic polymerization initiator (ADEKA OPTORON CP-66, manufactured by ADEKA Corporation) (25 g), and a photo-cationic polymerization initiator (ADEKA OPTOMER SP-150, manufactured by ADEKA Corporation) (25 g) were further added, and the resulting mixture was stirred, thereby obtaining a hard coat layer-forming composition 5.

A lens (Nikon Lite AS material S-3.00D, manufactured by Nikon-Essilor Co., Ltd.) with a refractive index of 1.60 was used as a plastic spectacle lens base.

The hard coat layer-forming composition 5 was applied on the surfaces of the plastic spectacle lens base by dip coating. Specifically, the plastic spectacle lens base was immersed in the hard coat layer-forming composition 5 and then pulled out at 400 mm/min, thereby obtaining a coating-bearing plastic spectacle lens base.

Next, the obtained coating-bearing plastic spectacle lens base was heated at 80°C for 20 minutes, and then the coating was irradiated with UV light (cumulative light quantity: 1,500 mJ/cm²) using a high-pressure mercury vapor lamp (80 W/cm²) as a light source, whereby a hard coat layer-bearing plastic spectacle lens base was obtained in which hard coat layers were separately disposed on the opposite sides of the plastic spectacle lens base. The obtained hard coat layers had a coating thickness of 8 µm.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

### <Example 6>

Butyl cellosolve (500 g), 1-methoxy-2-propanol (2 kg), 3-glycidoxypropyltrimethoxysilane (KBM-403, manufactured by Shin-Etsu Chemical Co., Ltd.) (270 g) as a hydrolyzable silicon compound, and polyether-modified silicone (L-7001, manufactured by Dow Corning Toray Co., Ltd.) (6 g) as a coating adjusting agent were charged into a brown bottle, and then 0.1 N aqueous hydrochloric acid solution (74 g) was added into the brown bottle. The resulting mixture was stirred for 12 hours at room temperature.

To the resulting mixture, methanol-dispersed colloidal silica (OSCAL-1132, manufactured by JGC Catalysts and Chemicals Ltd.) (1.5 kg), silica nanopowder (HSP-2S Type E, manufactured by Fuso Chemical Co., Ltd.) (1.4 kg), diglycerol polyglycidyl ether (DENACOL EX-313, manufactured by Nagase ChemteX Corporation) (80 g) as a polyfunctional epoxy compound, and silsesquioxane having an oxetanyl group (OX-SQ SI-20, manufactured by Toagosei Co., Ltd.) (1.85 kg) were further added, and the resulting mixture was stirred for 6 hours. Subsequently, to the resulting mixture, a hydroxyphenyl triazine UV absorber (Tinuvin 477, manufactured by BASF Japan Ltd.) (80 g), a thermal-cationic polymerization initiator (ADEKA OPTORON CP-66, manufactured by ADEKA Corporation) (25 g), and a photo-cationic polymerization initiator (ADEKA OPTOMER SP-150, manufactured by ADEKA Corporation) (30 g) were further added, and the resulting mixture was stirred, thereby obtaining a hard coat layer-forming composition 6.

A lens (Nikon Lite AS material S-3.00D, manufactured by Nikon-Essilor Co., Ltd.) with a refractive index of 1.60 was used as a plastic spectacle lens base.

The hard coat layer-forming composition 6 was applied on one surface of the plastic spectacle lens base by spin coating. Specifically, the plastic spectacle lens base was rotated at 300 rpm for 10 seconds, during which 2 ml of the hard coat layer-forming composition 6 was dropped thereon over the range from the center of the plastic spectacle lens base to the outer circumference thereof. Thereafter, the plastic spectacle lens base applied with the hard coat layer-forming composition 6 was rotated at 750 rpm for 10 seconds, thereby obtaining a coating-bearing plastic spectacle lens base.

Next, the obtained coating-bearing plastic spectacle lens base was heated at 80°C for 20 minutes, and then the coating was irradiated with UV light (cumulative light quantity: 1,500 mJ/cm²) using a high-pressure mercury vapor lamp (80 W/cm²) as a light source, thereby forming a hard coat layer. The obtained hard coat layer had a coating thickness of 15 µm.

The same treatment as above was performed also on the other surface of the plastic spectacle lens base, whereby a hard coat layer-bearing plastic spectacle lens base was obtained in which the hard coat layers were separately disposed on the opposite sides of the plastic spectacle lens base.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

### <Comparative Example 1>

A coating composition described in Example 1 of Patent Literature 1 (JP 2010-515778 A) (hereinafter also referred to as "comparative coating composition 1") was prepared according to the description of Patent Literature 1.

Using the comparative coating composition 1, according to the description of paragraph 0159 in Patent Literature 1, hard coat layers were separately formed on the opposite sides of a plastic spectacle lens base by heating treatment, thereby obtaining a hard coat layer-bearing plastic spectacle lens base.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

The obtained hard coat layers had a coating thickness of 3 µm.

A lens (Nikon Lite AS material S-3.00D, manufactured by Nikon-Essilor Co., Ltd.) with a refractive index of 1.60 was used as a plastic spectacle lens base.

### <Comparative Example 2>

A hard coat layer-bearing plastic spectacle lens base and an antireflection film-bearing plastic spectacle lens base were obtained according to the same procedure as Comparative Example 1 except that the procedure was adjusted to allow the resulting hard coat layers to have a coating thickness of 10 µm.

### <Comparative Example 3>

A coating composition described in Example 11 of Patent Literature 2 (JP 2009-256563 A) (hereinafter also referred to as "comparative coating composition 2") was prepared according to the description of Patent Literature 2.

Using the comparative coating composition 2, according to the description of paragraph 0159 in Patent Literature 2, hard coat layers were formed on a plastic spectacle lens base by heating treatment, thereby obtaining a hard coat layer-bearing plastic spectacle lens base.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

The obtained hard coat layers had a coating thickness of 3 µm.

A lens (Nikon Lite AS material S-3.00D, manufactured by Nikon-Essilor Co., Ltd.) with a refractive index of 1.60 was used as a plastic spectacle lens base.

### <Comparative Example 4>

A hard coat layer-bearing plastic spectacle lens base and an antireflection film-bearing plastic spectacle lens base were obtained according to the same procedure as Comparative Example 3 except that the procedure was adjusted to allow the resulting hard coat layers to have a coating thickness of 10 µm.

### <Comparative Example 5>

Butyl cellosolve (1.3 kg), 3-glycidoxypropyltrimethoxysilane (KBM-403, manufactured by Shin-Etsu Chemical Co., Ltd.) (270 g) as a hydrolyzable silicon compound, and polyether-modified silicone (8032 Additive, manufactured by Dow Corning Toray Co., Ltd.) (6 g) as a coating adjusting agent were charged into a brown bottle, and then 0.1 N aqueous hydrochloric acid solution (74 g) was added into the brown bottle. The resulting mixture was stirred for 12 hours at room temperature.

To the resulting mixture, methanol-dispersed colloidal silica (OSCAL-1132, manufactured by JGC Catalysts and Chemicals Ltd.) (6.3 kg), 1,6-hexanediol diglycidyl ether (DENACOL EX-212, manufactured by Nagase ChemteX Corporation) (680 g) as a polyfunctional epoxy compound, and silsesquioxane having an oxetanyl group (OX-SQ TX-100, manufactured by Toagosei Co., Ltd.) (1.25 kg) were further added, and the resulting mixture was stirred for 6 hours. Subsequently, to the resulting mixture, a hydroxyphenyl triazine UV absorber (Tinuvin 477, manufactured by BASF Japan Ltd.) (80 g), a thermal-cationic polymerization initiator (ADEKA OPTORON CP-66, manufactured by ADEKA Corporation) (25 g), and a photo-cationic polymerization initiator (ADEKA OPTOMER SP-171, manufactured by ADEKA Corporation) (30 g) were further added, and the resulting mixture was stirred, thereby obtaining a comparative coating composition 3.

A lens (Nikon Lite AS material S-3.00D, manufactured by Nikon-Essilor Co., Ltd.) with a refractive index of 1.60 was used as a plastic spectacle lens base.

The comparative coating composition 3 was applied on one surface of the plastic spectacle lens base by spin coating. Specifically, the plastic spectacle lens base was rotated at 300 rpm for 10 seconds, during which 2 ml of the comparative coating composition 3 was dropped thereon over the range from the center of the plastic spectacle lens base to the outer circumference thereof. Thereafter, the plastic spectacle lens base applied with the comparative coating composition 3 was rotated at 1,000 rpm for 5 seconds, thereby obtaining a coating-bearing plastic spectacle lens base.

Next, the obtained coating-bearing plastic spectacle lens base was heated at 80°C for 20 minutes, and then the coating was irradiated with UV light (cumulative light quantity: 1,200 mJ/cm²) using a high-pressure mercury vapor lamp (80 W/cm²) as a light source, thereby forming a hard coat layer. The obtained hard coat layer had a coating thickness of 10 µm.

The same treatment as above was performed also on the other surface of the plastic spectacle lens base, whereby a hard coat layer-bearing plastic spectacle lens base was obtained in which the hard coat layers were separately disposed on the opposite sides of the plastic spectacle lens base.

With the use of the obtained hard coat layer-bearing plastic spectacle lens base, according to the same procedure as Example 1, antireflection films were separately formed on the opposite sides of the hard coat layer-bearing plastic spectacle lens base. Thus, an antireflection film-bearing plastic spectacle lens base was obtained.

### <EVALUATION>

With the hard coat layer-bearing plastic spectacle lens bases and the antireflection film-bearing plastic spectacle lens bases obtained in Examples and Comparative Examples above, the evaluations below were conducted. The results are all shown in Table 1 below.

### (Lens Surface Measurement (Shape Change Measurement))

By measuring power distributions in 40 mm x 40 mm area using transmission by means of Dual LensMapper (manufactured by Automation & Robotics), a difference between the surface profiles before and after formation of the hard coat layer was determined to evaluate the shape change of the surface profile.

Specifically, the power distribution of the plastic spectacle lens base before formation of the hard coat layer was measured; subsequently, the hard coat layer was formed on the plastic spectacle lens base; thereafter, the power distribution of the obtained hard coat layer-bearing plastic spectacle lens base was measured; and the power distributions before and after formation of the hard coat layer were compared to each other. The smaller the change of power is, the smaller the change of surface profile of the plastic spectacle lens base after formation of the hard coat layer is.
Excellent: There is no change of power within the measurement area.
Good: There is a change of power of less than 0.1 D within the measurement area.
Fair: There is a change of power of not less than 0.1 D but less than 0.2 D within the measurement area.
Poor: There is a change of power of not less than 0.2 D within the measurement area.

### (Abrasion Resistance (Part 1))

The surface of the hard coat layer in the hard coat layer-bearing plastic spectacle lens base was rubbed back and forth 10 times with BONSTER #0000 steel wool (manufactured by Nippon Steel Wool Co., Ltd.) under 2 kg load, and the amount of scratches given at the surface (1 cm x 3 cm) of the hard coat layer was visually evaluated and rated as follows.
Excellent: There is no scratch.
Good: There are 1 to 30 scratches.
Fair: There are 31 to 100 scratches.
Poor: There are 101 or more scratches.

### (Abrasion Resistance (Part 2))

The same procedure as above (Abrasion Resistance (Part 1)) was repeated for evaluation except that the antireflection film-bearing plastic spectacle lens base was used in place of the hard coat layer-bearing plastic spectacle lens base.

### (Appearance Characteristics)

An appearance examination was visually conducted using a fluorescent lamp and a slide projector installed in a dark box. Specifically, haze and smoothness of the hard coat layer were examined by a transmitted light test conducted by transmitting light of the fluorescent lamp through the hard coat layer-bearing plastic spectacle lens base and by a reflected light test conducted by causing light of the fluorescent lamp to reflect on the surface of the hard coat layer.

In addition, haze and smoothness of the hard coat layer were examined by irradiating the lateral side of the plastic spectacle lens base with strong light using a slide projector.

The results were rated according to the following criterion.
Excellent: Neither haze nor poor smoothness is seen in the hard coat layer in the slide projector test.
Good: While haze or poor smoothness is seen in the hard coat layer in the slide projector test, neither haze nor poor smoothness is seen in the hard coat layer in the test with the fluorescent lamp in the dark box.
Poor: haze and/or poor smoothness is seen in the hard coat layer in the test with the fluorescent lamp in the dark box.

### (Adhesion)

The adhesion between the antireflection film and the hard coat layer was examined by the cross cut tape test according to JIS K 5600.

To be more specific, with a knife, the surface of the antireflection film of the antireflection film-bearing plastic spectacle lens base was cut at 1-mm intervals to reach the plastic spectacle lens base; thus, 25 squares were formed. Next, a cellophane adhesive tape (CELLOTAPE (registered trademark), manufactured by Nichiban Co., Ltd.) was firmly pressed against the thus cut antireflection film. Subsequently, the cellophane adhesive tape was quickly pulled toward the 90° (perpendicular) direction relative to the surface of the antireflection film and thereby peeled off, whereafter the number of squares remaining on the plastic spectacle lens base was counted. The adhesion was rated according to the following criterion.
Excellent: There was no peel-off.
Good: Peel-off slightly occurred in a dot form.
Fair: Peel-off occurred, and the peeled off area was less than 10% relative to the surface area.
Poor: Peel-off occurred, and the peeled off area was not less than 10% relative to the surface area.

### (Hot Water Test)

The antireflection film-bearing plastic spectacle lens base was immersed in hot water at 90°C for 2 hours, and after pulled out, underwent the same evaluation as the adhesion evaluation described above.

Table 1 shows the amounts of the respective components contained in each hard coat layer-forming composition. In Table 1, the amounts are converted such that the sum of the amounts of (A) component to (G) component becomes "100 mass%."

The "(G) Additive" column in Table 1 shows the amounts (parts by mass) of UV absorbers in Examples 1 and 3 to 6 and Comparative Example 5 and the amount of antiaging agent in Example 2. For Comparative Examples 2 to 4, the amounts of components that do not belong to any of (A) component to (F) component are shown in the "(G) Additive" column.

The "Coating thickness (µm)" in Table 1 shows the coating thickness of each hard coat layer.

In the evaluation section in Table 1, "Good" or "Excellent" is favorable in practical use.

**[Table 1]**

| Table 1 | Hard coat layer-forming composition (parts by mass) | | | | | | | | | Coating thickness (µm) | Evaluation | | | | | |
|---|---|---|---|---|---|---|---|---|---|---|---|---|---|---|---|---|
| | (A) Polyfunctional epoxy compound | (B) Silsesquioxane compound | (C) Metal oxide particles | (D) Hydrolyzable silicon compound | (E) Photo-cationic polymerization initiator | (F) Thermal-cationic polymerization initiator | (G) Additive | B/ (A+B) (mass%) | (B+A) / Total solids (mass%) | | Shape change measurement | Abrasion Resistance (Part 1) | Abrasion Resistance (Part 2) | Appearance characteristics | Adhesion | Hot water test |
| Example 1 | 1.9 | 44.7 | 45.7 | 4.7 | 0.7 | 0.6 | 1.7 | 96 | 47 | 10 | Excellent | Excellent | Excellent | Excellent | Excellent | Excellent |
| Example 2 | 2 | 45.3 | 46.2 | 4.7 | 0.5 | 0.7 | 0.6 | 96 | 47 | 2.5 | Excellent | Good | Good | Excellent | Excellent | Excellent |
| Example 3 | 14.2 | 39.5 | 40 | 4 | 0.6 | 0.3 | 1.4 | 74 | 54 | 8.5 | Excellent | Good | Excellent | Good | Excellent | Excellent |
| Example 4 | 2.4 | 55.9 | 31.7 | 5.8 | 0.8 | 0.8 | 2.6 | 96 | 58 | 9 | Excellent | Excellent | Good | Excellent | Excellent | Excellent |
| Example 5 | 3.3 | 40.5 | 41.3 | 9.3 | 0.5 | 0.5 | 4.6 | 92 | 44 | 8 | Good | Excellent | Excellent | Good | Excellent | Excellent |
| Example 6 | 2 | 46.8 | 43.2 | 4.8 | 0.8 | 0.6 | 1.8 | 96 | 49 | 15 | Excellent | Excellent | Excellent | Excellent | Excellent | Excellent |
| Comparative example 1 | 14.1 | 20.8 | 0 | 55.7 | 4.7 | 0 | 4.7 | 60 | 34.9 | 3 | Fair | Fair | Poor | Good | Poor | Poor |
| Comparative example 2 | 14.1 | 20.8 | 0 | 55.7 | 4.7 | 0 | 4.7 | 60 | 34.9 | 10 | Poor | Good | Poor | Poor | Poor | Poor |
| Comparative example 3 | 31.1 | 12.4 | 41.4 | 12.4 | 0 | 0 | 2.7 | 29 | 43.5 | 3 | Fair | Good | Good | Good | Good | Good |
| Comparative example 4 | 31.1 | 12.4 | 41.4 | 12.4 | 0 | 0 | 2.7 | 29 | 43.5 | 10 | Poor | Excellent | Excellent | Poor | Good | Good |
| Comparative example 5 | 16.5 | 30.2 | 45.7 | 4.6 | 0.7 | 0.6 | 1.7 | 65 | 47 | 10 | Excellent | Fair | Excellent | Fair | Excellent | Excellent |

As shown in Table 1, the results confirmed that the use of the hard coat layer-forming composition containing the predetermined components brought about desired effects.

### REFERENCE SIGNS LIST

- 10: spectacle lens
- 12: plastic spectacle lens base
- 14: hard coat layer

## Claims

1. A hard coat layer-forming composition used to form a hard coat layer on or above a base, the hard coat layer-forming composition comprising:
a compound having a plurality of epoxy groups;
a silsesquioxane compound having an oxetanyl group;
a photo-cationic polymerization initiator; and
a thermal-cationic polymerization initiator,
wherein an amount of the silsesquioxane compound having an oxetanyl group based on a total mass of the compound having a plurality of epoxy groups and the silsesquioxane compound having an oxetanyl group is more than 70 mass%.

2. The hard coat layer-forming composition according to claim 1, further including metal oxide particles.

3. The hard coat layer-forming composition according to claim 1 or 2, further including at least one selected from the group consisting of a hydrolyzable silicon compound, a hydrolysate thereof, and a hydrolyzed condensate thereof.

4. The hard coat layer-forming composition according to any one of claims 1 to 3,
wherein a total mass of the compound having a plurality of epoxy groups and the silsesquioxane compound having an oxetanyl group based on hard coat layer constituents is 35 to 70 mass%.

5. The hard coat layer-forming composition according to any one of claims 1 to 4,
wherein the base is a spectacle lens base.

6. A spectacle lens, comprising:
a spectacle lens base; and
a hard coat layer formed using the hard coat layer-forming composition according to any one of claims 1 to 5 and disposed on or above the spectacle lens base.

7. The spectacle lens according to claim 6,
wherein the hard coat layer has a coating thickness of not less than 1.5 µm.

## Patentansprüche

1. Zusammensetzung, die eine harte Beschichtungsschicht bildet, die zur Bildung einer harten Beschichtungsschicht auf oder oberhalb einer Basis verwendet wird, wobei die Zusammensetzung zur Bildung der harten Beschichtungsschicht enthält:
eine Verbindung mit einer Vielzahl von Epoxygruppen,
eine Silsesquioxanverbindung mit einer Oxetanylgruppe,
einen foto-kationischen Polymerisationsinitiator und
einen thermisch-kationischen Polymerisationsinitiator,
worin eine Menge der Silsesquioxanverbindung mit einer Oxetanylgruppe auf der Basis einer gesamten Masse der Verbindung mit einer Vielzahl von Epoxygruppen und der Silsesquioxanverbindung mit einer Oxetanylgruppe mehr als 70 Masse-% ist.

2. Zusammensetzung, die eine harte Beschichtungsschicht bildet, gemäß Anspruch 1, weiterhin enthaltend Metalloxidteilchen.

3. Zusammensetzung, die eine harte Beschichtungsschicht bildet, gemäß Anspruch 1 oder 2, weiterhin enthaltend zumindest eine, ausgewählt aus der Gruppe, bestehend aus einer hydrolysierbaren Siliciumverbindung, einem Hydrolysat davon und einem hydrolysierten Kondensat davon.

4. Zusammensetzung, die eine harte Beschichtungsschicht bildet, gemäß einem der Ansprüche 1 bis 3, worin eine Gesamtmasse der Verbindung mit einer Vielzahl von Epoxygruppen und der Silsesquioxanverbindung mit einer Oxetanylgruppe auf der Basis der harten Beschichtungsschichtbestandteile 35 bis 70 Masse-% ist.

5. Zusammensetzung, die eine harte Beschichtungsschicht bildet, gemäß einem der Ansprüche 1 bis 4, worin die Basis eine Brillenglasbasis ist.

6. Brillenglas, enthaltend:
ein Brillenglas und
eine harte Beschichtungsschicht, gebildet unter Verwendung der Zusammensetzung, die eine harte Beschichtungsschicht bildet, gemäß einem der Ansprüche 1 bis 5, und die auf oder oberhalb der Brillenglasbasis angeordnet ist.

7. Brillenglas gemäß Anspruch 6, worin die harte Beschichtungsschicht eine Beschichtungsdicke von nicht weniger als 1,5 µm hat.

## Revendications

1. Composition de formation de couche de revêtement dur utilisée pour former une couche de revêtement dur sur ou au-dessus d'une base, la composition de formation de couche de revêtement dur comprenant :
un composé présentant une pluralité de groupes époxy ;
un composé de silsesquioxane présentant un groupe oxétanyle ;
un initiateur de polymérisation photo-cationique ; et
un initiateur de polymérisation thermo-cationique,
dans laquelle une quantité du composé de silsesquioxane présentant un groupe oxétanyle sur la base d'une masse totale du composé présentant une pluralité de groupes époxy et du composé de silsesquioxane présentant un groupe oxétanyle est supérieure à 70 % en masse.

2. Composition de formation de couche de revêtement dur selon la revendication 1, incluant en outre des particules d'oxyde métallique.

3. Composition de formation de couche de revêtement dur selon la revendication 1 ou 2, incluant en outre au moins un choisi dans le groupe consistant en un composé de silicium hydrolysable, un hydrolysat de celui-ci et un condensat hydrolysé de celui-ci.

4. Composition de formation de couche de revêtement dur selon l'une quelconque des revendications 1 à 3,
dans laquelle une masse totale du composé présentant une pluralité de groupes époxy et du composé de silsesquioxane présentant un groupe oxétanyle sur la base de constituants de couche de revêtement dur est de 35 à 70 % masse.

5. Composition de formation de couche de revêtement dur selon l'une quelconque des revendications 1 à 4,
dans laquelle la base est une base de verre de lunettes.

6. Verre de lunettes, comprenant :
une base de verre de lunettes ; et
une couche de revêtement dur formée en utilisant la composition de formation de couche de revêtement dur selon l'une quelconque des revendications 1 à 5 et disposée sur ou au-dessus de la base de verre de lunettes.

7. Verre de lunettes selon la revendication 6,
dans lequel la couche de revêtement dur présente une épaisseur de revêtement supérieure ou égale à 1,5 µm.
